## Europäisches Patentamt
## European Patent Office
## Office européen des brevets

(19)

(11) Numéro de publication: **0 235 487 B1**

(12)

# FASCICULE DE BREVET EUROPEEN

(45) Date de publication du fascicule du brevet:
**24.10.90**

(51) Int. Cl.⁵: **A61C 17/02, B05B 1/18**

(21) Numéro de dépôt: **86430051.2**

(22) Date de dépôt: **09.12.86**

(54) **Appareil hydrique d'hygiène corporelle.**

(30) Priorité: **10.12.85 FR 8518378**

(43) Date de publication de la demande:
**09.09.87 Bulletin 87/37**

(45) Mention de la délivrance du brevet:
**24.10.90 Bulletin 90/43**

(84) Etats contractants désignés:
**AT BE CH DE ES FR GB GR IT LI LU NL SE**

(56) Documents cités:
**CH-A- 151 610
CH-A- 499 311
CH-A- 540 687
DE-A- 2 746 453
DE-B- 1 223 770
FR-A- 1 208 189
FR-A- 2 350 144
US-A- 2 333 767
US-A- 2 521 490
US-A- 2 568 429
US-A- 2 813 529
US-A- 2 842 154
US-A- 3 762 648**

(73) Titulaire: **Zinopoulos, Jean, Les Comores -Baie des Anges, F-13600 La Ciotat(FR)**
Titulaire: **Zinopoulos, André, Closerie des Pins, F-13170 La Gavotte(FR)**

(72) Inventeur: **Zinopoulos, Jean, Les Comores -Baie des Anges, F-13600 La Ciotat(FR)**
Inventeur: **Zinopoulos, André, Closerie des Pins, F-13170 La Gavotte(FR)**

(74) Mandataire: **Marek, Pierre, 28 & 32 rue de la Loge, F-13002 Marseille(FR)**

ACTORUM AG

## Description

La présente invention concerne un appareil hydrique d'hygiène corporelle permettant notamment le lavage de l'ensemble des parties du corps, y compris des différentes cavités anatomiques, ainsi que le massage au moyen de jets d'eau.

On connait (CH-A-499.311) un appareil pour les soins de la bouche et des dents, comprenant un robinet à trois voies angulairement espacées de 90 degrés et comportant trois raccords dont un pour le raccordement à une arrivée d'eau, un deuxième pour l'assemblage à un embout d'écoulement, et un troisième pour l'accouplement à un tuyau flexible, muni indifféremment d'une douche buccale, d'un pulvérisateur ou d'une brosse à dent spéciale, ce robinet à trois voies étant logé dans un boîtier destiné à être fixé sur une paroi et muni d'un bouton de manoeuvre saillant.

Un appareil de ce genre présente plusieurs inconvénients ou insuffisances tels que :
- son montage fixe qui limite grandement les possibilités de lavage corporel et qui entraîne l'obligation d'installer un tuyau flexible de distribution pour le branchement d'un instrument de lavage buccal ;
- la disposition orthogonale du conduit d'alimentation et des deux conduits de distribution qui supprime pratiquement toute possibilité de transformation de cet appareil fixe en un appareil mobile ;
- l'impossibilité d'incorporation, à l'eau de lavage, de substances antiseptiques, thérapeutiques, médicinales ou autres ;
- l'absence de possibilité de modification des caractéristiques des jets d'eau produits.

Les inconvénients et insuffisances de ce genre d'appareils font que l'hygiène corporelle est toujours présentement assurée par l'utilisation de différents points d'eau spécialisés répartis en divers emplacements des salles de bain (lavabo, douche, baignoire, bidet) et par l'adjonction de dispositifs complémentaires spécifiques tels que hydropulseurs, poires de lavement, etc., qui présentent des caractéristiques souvent mal adaptées à leur fonction (volume d'eau réduit, débit trop faible, pression parfois trop élevée, surface active du ou des jets réduite) et, en conséquence, une efficacité relative, ou une action nocive.

La présente invention a notamment pour objectif de remédier aux désavantages découlant de la situation susmentionnée, ainsi qu'aux inconvénients et insuffisances de l'appareil décrit dans le document CH-A-499.311.

L'appareil hydrique selon l'invention est en premier lieu remarquable par le fait qu'il comprend un corps dont une portion est agencée pour constituer une poignée munie d'un filetage permettant son raccordement à un tuyau flexible d'arrivée, ce corps étant pourvu, intérieurement, de deux conduits de distribution et d'un conduit d'entrée susceptible d'être mis en communication avec l'un ou l'autre desdits conduits de distribution, suivant la position d'un sélecteur à deux positions, l'un desdits conduits de distribution débouchant dans une large cavitée ménagée dans le corps et délimitée par une paroi perforée constituant une pomme de douche, tandis que le second desdits conduits de distribution communique avec une embouchure de raccordement également ménagée dans ledit corps, ledit appareil comportant encore un ajutage amovible doté d'un embout de fixation destiné à être relié à ladite embouchure, par exemple par insertion dans cette dernière.

L'appareil ainsi réalisé a pour avantages d'être simple, peu encombrant, de manipulation facile, et de permettre aussi bien l'arrosage du corps grâce à sa pomme de douche, que le lavage ou le rinçage des dents et le massage hydrique des gencives en utilisant un ajutage approprié, ou, encore, au moyen d'autres ajutages adéquats, le lavage ou l'irrigation vaginale ou rectale.

Selon une autre disposition avantageuse de l'invention, une cavité munie d'un moyen de fermeture étanche, est ménagée dans le corps de l'appareil, cette cavité étant disposée en amont de l'embouchure de raccordement et communiquant à la fois, avec ladite embouchure et avec le conduit de distribution placé en relation avec cette dernière ; une crépine étant, de préférence, installée dans ladite cavité.

Grâce à cette disposition, il est possible de disposer des sels ou autres substances solubles dans la cavité, ces sels étant dissouts lors du passage de l'eau à travers ladite cavité, de sorte que l'on obtient, à la sortie des ajutages, en fonction des besoins, des jets d'une solution antiseptique, médicamenteuse ou autre, suivant la nature desdits sels.

Selon une autre disposition caractéristique de l'invention, un dispositif pulsateur est disposé sur le conduit de distribution aboutissant à l'embouchure de raccordement et/ou sur le conduit de distribution aboutissant à la pomme de douche, ce pulsateur pouvant encore être placé, dans le corps, en amont des deux conduits de sortie, soit à l'extérieur de l'appareil en amont du tuyau flexible d'arrivée.

Grâce à ces agencements, il est possible de modifier la caractéristique des jets d'eau à la sortie des ajutages, ou de la pomme de douche, de façon à obtenir, en fonction des besoins, des jets filiformes continus, ou pulsés, ces derniers permettant notamment d'exercer une action de massage efficace sur les tissus arrosés.

Les buts, caractéristiques et avantages ci-dessus, et d'autres encore, ressortiront mieux de la description qui suit et des dessins annexés dans lesquels :

La figure 1 est une vue en coupe axiale d'un premier mode d'exécution simplifié de l'appareil hydrique d'hygiène corporelle selon l'invention, représenté dans la position permettant l'utilisation de la douche.

Les figures 2 et 3 sont des vues en perspective de deux formes d'exécution avantageuses d'ajutages amovibles destinés à l'hygiène bucco-dentaire.

La figure 4 est une vue, en coupe axiale et à plus grande échelle, de l'embout de fixation de ces ajutages à l'intérieur duquel est monté un limiteur de débit et de pression.

La figure 5 est une vue en coupe selon la ligne 5-5 de la figure 4.

La figure 6 est une vue en perspective, avec coupes partielles, d'un prolongateur tubulaire flexible permettant le montage à distance des ajutages amovibles.

La figure 7 est une vue en coupe axiale d'un mode d'exécution d'un ajutage amovible constitué par une douchette destinée à l'hygiène corporelle interne (vaginale ou rectale).

La figure 8 est une vue en coupe selon la ligne 8-8 de la figure 7.

La figure 9 est une vue en coupe axiale d'un ajutage amovible constitué par une douchette de massage hydrique.

La figure 10 est une vue en coupe axiale d'un autre mode d'exécution de l'ajutage amovible constitué par un irrigateur pour poche parodontale.

La figure 11 est une vue en coupe axiale du mode d'exécution de l'appareil hydrique d'hygiène corporelle selon l'invention avec le dispositif pulsateur disposé dans le corps.

La figure 12 est une vue de dessus de cet appareil.

La figure 13 est une vue en coupe longitudinale éclatée de la tête dudit appareil.

La figure 14 est une vue en plan du sélecteur permettant de diriger l'eau soit vers la pomme de douche corporelle, soit vers l'ajutage amovible monté sur la tête de l'appareil.

La figure 15 est une vue en coupe selon la ligne 15-15 de la figure 14.

La figure 16 est une vue en coupe axiale de la partie inférieure du carter fixe contenant les organes mobiles du pulsateur.

La figure 17 est une vue en coupe selon la ligne 17-17 de la figure 16.

La figure 18 est une vue en plan du disque porte-pivot inférieur du pulsateur.

La figure 19 est une vue en coupe suivant la ligne 19-19 de la figure 18.

La figure 20 est une vue en coupe axiale de la turbine du pulsateur.

La figure 21 est une vue en coupe selon la ligne 21-21 de la figure 20.

La figure 22 est une vue en coupe suivant la ligne 22-22 de la figure 20.

La figure 23 est une vue en coupe axiale de la partie supérieure du carter du pulsateur.

La figure 24 est une vue en coupe selon la ligne 24-24 de la figure 23.

La figure 25 est une vue en coupe selon la ligne 25-25 de la figure 23.

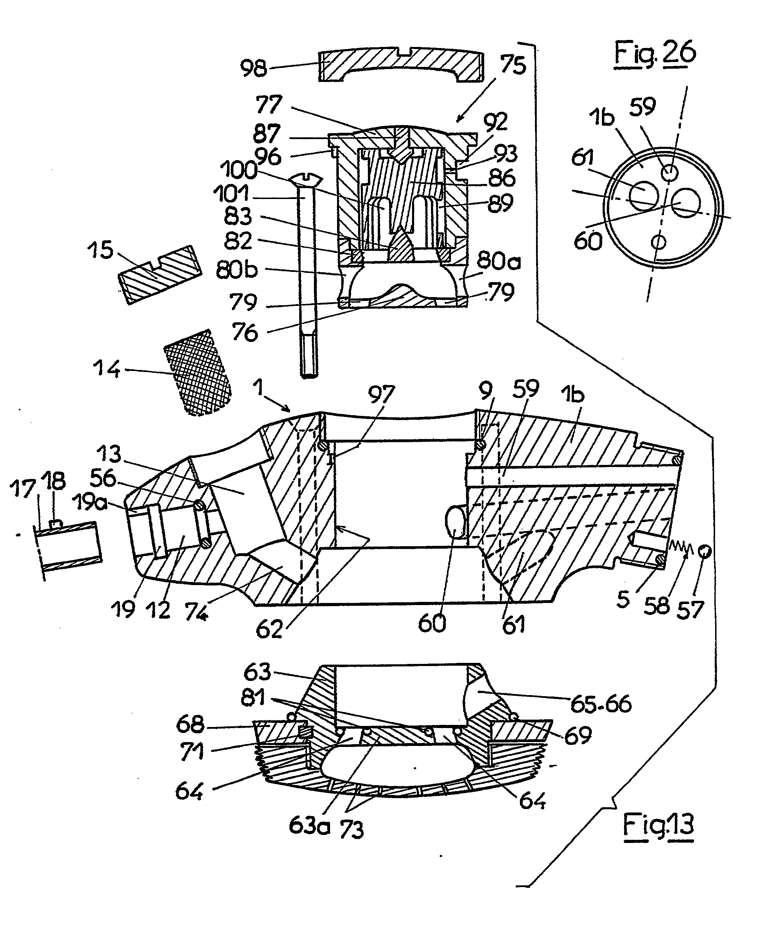

La figure 26 est une vue de face de l'extrémité plane de jonction de la tête rotative de l'appareil.

La figure 27 est une vue en coupe axiale d'un pulsateur apte à être disposé entre un robinet mélangeur et un flexible de douche.

La figure 28 est une section selon la ligne 28-28 de la figure 27.

La figure 29 est une section suivant la ligne 29-29 de la figure 27.

On se reporte auxdits dessins pour décrire des formes d'exécution avantageuses, bien que nullement limitatives, de l'appareil hydrique d'hygiène corporelle selon l'invention.

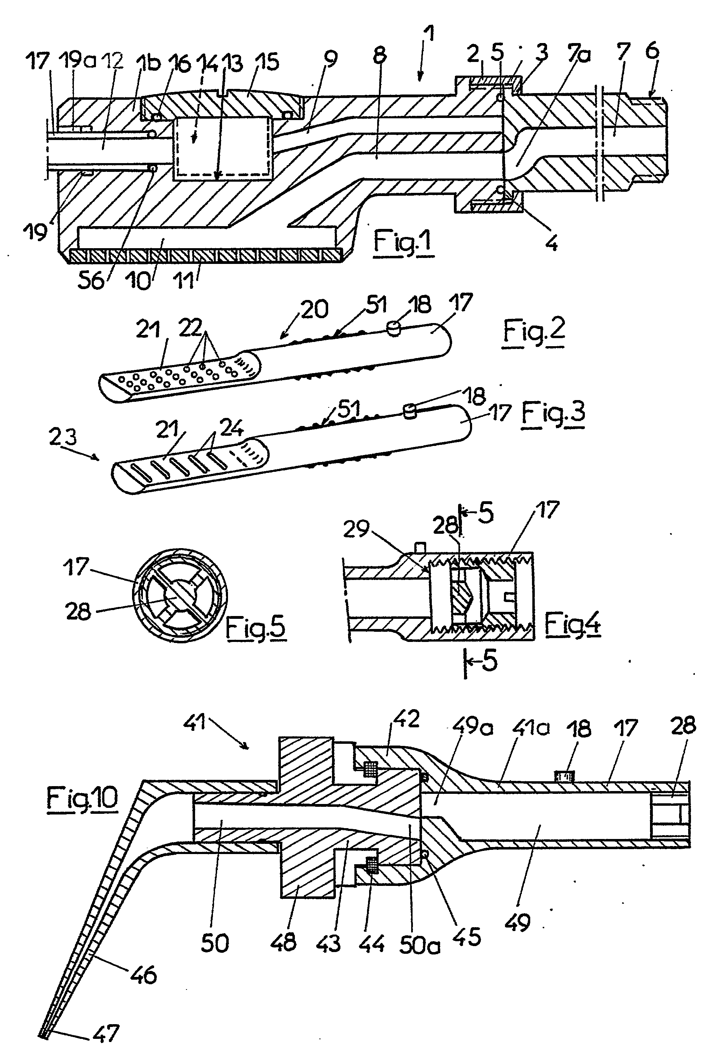

Suivant l'exemple de réalisation simplifié illustré à la figure 1, cet appareil comprend un corps 1 exécuté en deux parties 1a, 1b accolées dans le prolongement l'une de l'autre par l'intermédiaire de l'une de leurs extrémités comportant une surface plane. Ces parties 1a, 1b, sont assemblées, de manière étanche, au moyen d'un dispositif d'accouplement permettant une rotation de l'une d'elles autour de son axe longitudinal. Ce dispositif d'accouplement comprend, par exemple, une bague alésée 2 se vissant sur un filetage que présente l'extrémité postérieure de la partie 1b, et munie d'un épaulement circulaire 3 prenant appui contre un épaulement périphérique 4 dont est pourvue l'extrémité avant de la partie 1a. L'étanchéité entre les surfaces en contact des parties 1a, 1b est assurée au moyen d'un joint annulaire 5 logé dans une gorge ménagée dans l'une desdites surfaces.

La partie 1a du corps 1 est agencée pour constituer une poignée et son extrémité postérieure est pourvue d'un filetage 6 permettant son raccordement à un tuyau flexible et, de manière intéressante, au tuyau flexible de douche d'un robinet-mélangeur muni d'un raccord adéquat.

Dans la partie 1a constituant la poignée de l'appareil, est ménagé un conduit longitudinal d'arrivée 7 dont la sortie 7a est excentrée.

La partie révolutive 1b du corps 1 ou tête de l'appareil, comporte deux conduits de distribution intérieurs 8 et 9 dont l'entrée est susceptible d'être mise sélectivement en relation avec la sortie excentrée 7a du conduit d'arrivée 7, au moyen de la rotation de ladite partie. Cet agencement permet de réaliser un sélecteur très simplifié.

L'un des conduits de distribution (conduit 8) débouche dans une large chambre 10 ménagée latéralement dans la partie 1b, cette chambre étant délimitée par une paroi perforée 11 fixée sur ladite partie et constituant une pomme de douche classique.

L'autre conduit de distribution (conduit 9) communique avec une embouchure de raccordement qui peut être avantageusement constituée par un logement cylindrique 12 ménagé longitudinalement dans la partie avant du corps 1.

De manière intéressante, une cavité 13 est ménagée dans la partie 1b du corps, en amont de l'embouchure de raccordement 12 en considérant le sens d'écoulement de l'eau. Le conduit 9 débouche dans cette cavité qui communique avec l'embouchure de raccordement 12. Dans la cavité 13, est installée une crépine 14, et l'entrée de ladite cavité est munie d'un moyen de fermeture étanche par exemple constitué par un bouchon 15 équipé d'un joint d'étanchéité annulaire 16 et se fixant par vissage.

L'appareil selon l'invention comporte encore un ajutage amovible qui peut avoir différentes conformations, en fonction de l'usage auquel il est destiné.

On a donc prévu un certain nombre de types d'ajutages adaptés aux différents problèmes d'hygiène corporelle externe ou interne.

Chacun de ces ajutages amovibles comporte un embout 17 permettant son raccordement à l'embouchure 12. Selon le mode d'exécution illustré, chaque ajutage présente un embout cylindrique 17 permettant son engagement et sa fixation dans l'embouchure cylindrique 12 de la tête 1b.

L'embout de fixation 17 et l'embouchure 12 sont pourvus de moyens complémentaires permettant le verrouillage dudit embout dans ladite embouchure. Ces moyens sont, par exemple, constitués, d'une part, par un ergot radial 18 porté par la surface latérale de l'embout et, d'autre part, par une gorge annulaire 19 ménagée à l'intérieur de l'embouchure et dans laquelle débouche une gorge longitudinale d'engagement et de dégagement 19a. Cette fixation simple a pour autre avantage de permettre des mouvements de rotation de l'ajutage installé sur la tête de l'appareil, par rapport à ladite tête ; de tels mouvements d'amplitude limitée pouvant être très utiles, par exemple pour le lavage, le rinçage ou le massage des dents.

La figure 2 montre un ajutage réalisé sous forme de douchette buccale 20 comportant une portion antérieure aplanie formant une surface rectangulaire 21 sur laquelle s'inscrit un maillage de perforations circulaires 22 disposées, avec ou sans interruption, aux croisements de lignes orthogonales. L'entr'axe des perforations des mailles transversales est de l'ordre de 2 à 3 mm ; le nombre de perforations étant de 3 à 4 par rangée transversale. D'autre part, l'entr'axe des mailles longitudinales est de l'ordre de 4 à 5 mm ; le nombre de perforations étant de 5, 6 ou 7 par alignement longitudinal. En fonction du type de douchettes buccales utilisées et du nombre de perforations, le diamètre de celle-ci est de l'ordre de 0,5 à 1 mm.

La douchette buccale 23 illustrée à la figure 3 diffère de celle qui vient d'être décrite par le fait que les rangées transversales perforées, sont remplacées par des fentes transversales espacées 24 dont les extrémités peuvent être évasées vers l'extérieur.

Le corps des deux ajutages est présenté rectiligne, dans l'exemple illustré aux figures 2 et 3. Il peut être légèrement coudé dans le sens qui place le plan des perforations ou des fentes, dans l'angle obtu rentrant.

La douchette 25 illustrée à la figure 7 est destinée à l'irrigation corporelle interne (vaginale ou rectale). Elle comporte un corps creux allongé 26 sur lequel est monté, avec une aptitude de coulissement, un manchon souple de positionnement 27, et dont l'extrémité postérieure est constituée par un embout de fixation 17 muni de son ergot de verrouillage 18.

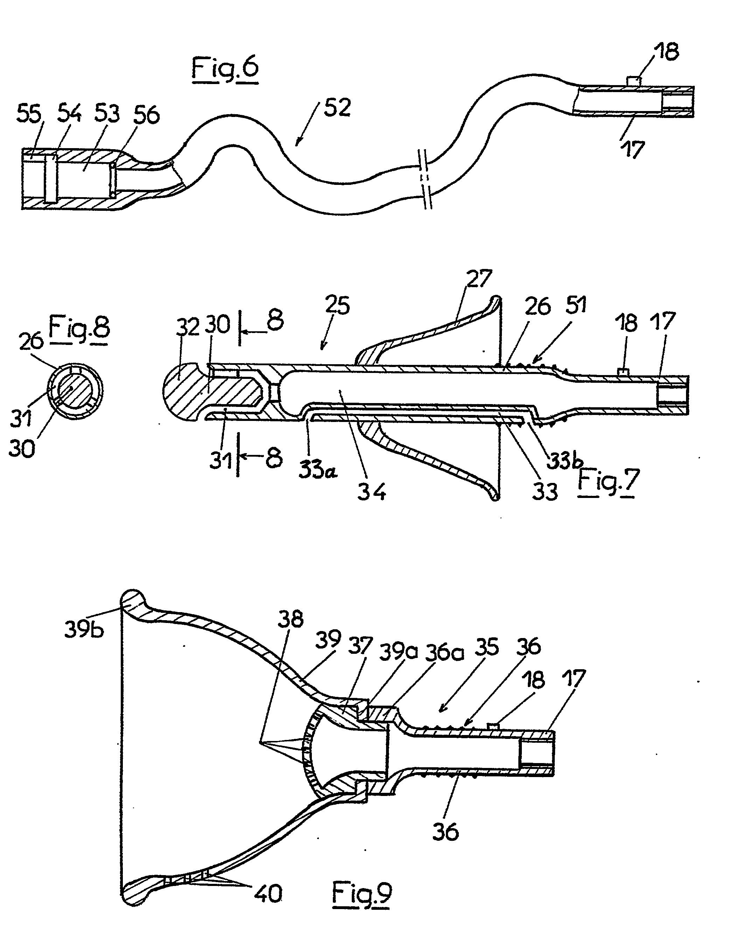

A l'intérieur de l'embout 17 doté d'un taraudage, est monté, avec une latitude de déplacement axial par vissage, un limiteur de débit 28 (figures 4 et 5) permettant d'abaisser la pression de l'eau, par laminage de cette dernière sur un palier 29, par exemple constitué par le fond du logement dudit limiteur de débit. Le réglage s'effectue par l'utilisateur en vissant plus ou moins ce limiteur de débit, et ce, pour une ouverture maximum du robinet mélangeur.

Un détendeur secondaire variateur de débit 30 permet d'affiner ce réglage. Les jets d'eau sont engendrés par les éjecteurs annulaires 31 de ce variateur de débit dont la tête arrondie 32 facilite la pénétration. Des canaux 33 sont ménagés longitudinalement dans le corps 26, parallèlement au conduit axial principal 34, pour permettre une évacuation complémentaire, les orifices 33a, 33b de ces canaux supplémentaires étant ménagés latéralement dans ledit corps.

La figure 9 représente une douchette pour massage hydrique. Cette douchette 35 comporte un corps creux 36 de forme allongée dont l'extrémité postérieure est constituée par un embout de fixation 17 muni de son ergot de verrouillage 18. A l'intérieur de cet embout, comme à l'intérieur de l'embout de fixation des différentes douchettes susceptibles de constituer l'ajutage amovible de l'appareil selon l'invention, peut être installé un limiteur de débit 28 identique ou comparable à celui qui équipe la douchette 25.

L'autre extrémité 36a du corps 36 est évasée et dans cette extrémité évasée est montée, par exemple par vissage, une pomme de douche 37 pourvue de perforations 38. Un manchon souple 39 en forme de cloche est disposé à la partie avant de la douchette, ce manchon étant par exemple fixé, par son extrémité retrécie 39a, entre la pomme de douche 37 et le corps 36, en assurant l'étanchéité entre ces deux éléments.

L'extrémité évasée 39b du manchon 39 est destinée à s'appliquer sur la partie du corps à traiter, et ledit manchon comporte, latéralement, des orifices 40 permettant l'évacuation de l'eau de massage.

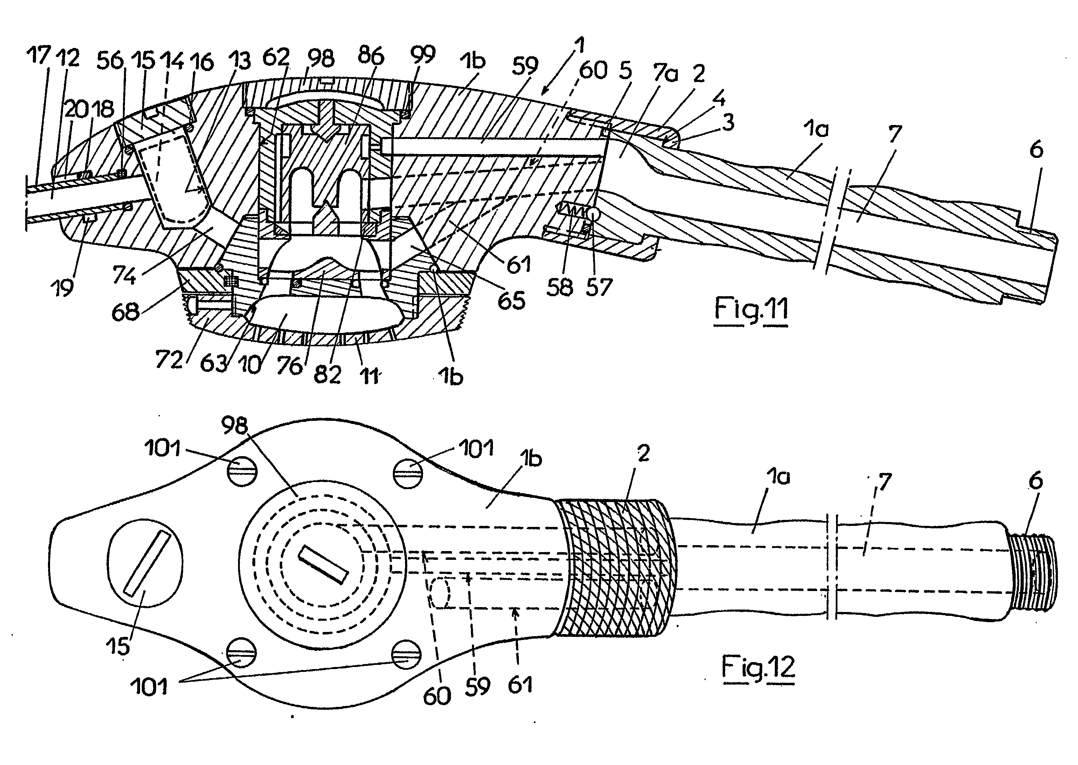

La figure 10 montre un ajutage constitué par un irrigateur permettant d'assurer, en association avec les sels solubles déposés dans la cavité 13, une irrigation, par exemple des poches parodontales.

Cet irrigateur 41 comprend un corps creux 41a de forme allongée dont l'extrémité postérieure est constituée par un embout de fixation 17 muni de son ergot de verrouillage 18 et comportant, avantageusement, intérieurement, un limiteur de débit principal 28. L'autre extrémité du corps 41a est évasée et, dans cette extrémité évasée 42, est monté, avec une aptitude de rotation, un limiteur de débit secondaire 43 maintenu dans son logement par un clips circulaire 44. Un joint annulaire 45 assure l'étanchéité entre les surfaces en contact du corps 41a et du limiteur de débit 43. Sur l'extrémité avant du limiteur de débit, est monté un embout d'éjection 46 coudé ou rectiligne et réalisé en matière plastique semi-souple avec pointe mousse 47. Une molette 48, solidaire du corps du limiteur de débit 43, facilite la manoeuvre de celui-ci. Les orifices contigus 49a, 50a des conduits 49 et 50 ménagés, respectivement, dans le corps 41 et dans le limiteur de débit 43, sont excentrés, de sorte que le réglage complémentaire du débit peut s'opérer en faisant coïncider plus ou moins complètement lesdits orifices.

Afin de faciliter leur manipulation, le corps creux des différents ajutages amovibles comporte des stries 51 sur une portion de sa longueur.

La figure 6 montre un tuyau prolongateur flexible 52 facilitant l'utilisation de certaines des douchettes précédemment décrites. L'une des extrémités de ce prolongateur est constituée par un embout de fixation 17 muni de son ergot de verrouillage 18, tandis que sa seconde extrémité comporte un logement cylindrique 53 agencé de manière semblable au logement 12 prévu à la partie avant 1b du corps 1 de l'appareil, pour la réception de l'embout de fixation 17 des ajustages amovibles. Dans ce logement, est également ménagée une gorge annulaire 54 destinée à recevoir l'ergot 18 de l'embout de fixation 17 des ajutages, et dans laquelle débouche une gorge longitudinale 55 d'engagement et de dégagement dudit ergot.

Un joint 56 est installé dans le fond des logements 12 et 53, afin d'assurer l'étanchéité entre les surfaces en contact desdits logements et des embouts de fixation 17 des différents ajutages amovibles ou du prolongateur.

On comprend que, par simple rotation de la tête 1b par rapport à la poignée 1a, il est possible de mettre le conduit d'arrivée 7 en communication, soit avec le conduit 8 permettant d'acheminer l'eau jusqu'à la pomme de douche 11, soit avec le conduit 9 par l'intermédiaire duquel l'eau peut être dirigée vers l'ajutage amovible installé à l'avant de ladite tête.

Les figures 11 à 25 illustrent un autre mode de réalisation de l'appareil hydrique d'hygiène corporelle selon l'invention qui, dans ce cas, est équipé d'un pulsateur permettant d'obtenir, à volonté, un débit d'eau pulsé ou un débit continu.

Les parties de cet appareil qui sont identiques ou qui accomplissent une fonction analogue à celle de l'appareil précédemment décrit sont désignées par les mêmes références.

Selon ce mode de réalisation, un moyen est prévu pour immmobiliser la partie rotative ou tête 1b du corps 1 dans la position souhaitée, un tel moyen pouvant également équiper l'appareil simplifié déjà décrit. Ce moyen, est, par exemple, constitué par une bille 57 poussée par un ressort 58 logé dans un alésage ménagé dans l'une des parties (par exemple partie 1b) du corps 1 dont l'autre partie (partie 1a) comporte une gorge circulaire dans le fond de laquelle sont prévues des petites cavités pour le positionnement de ladite bille.

Trois canaux 59, 60 et 61 sont ménagés dans la portion postérieure de la partie rotative ou tête 1b du corps, ces canaux aboutissant dans une large cavité transversale 62 que présente ladite tête.

Dans la partie supérieure de cette cavité, est logé un pulsateur hydraulique au-dessous duquel est installé un second sélecteur.

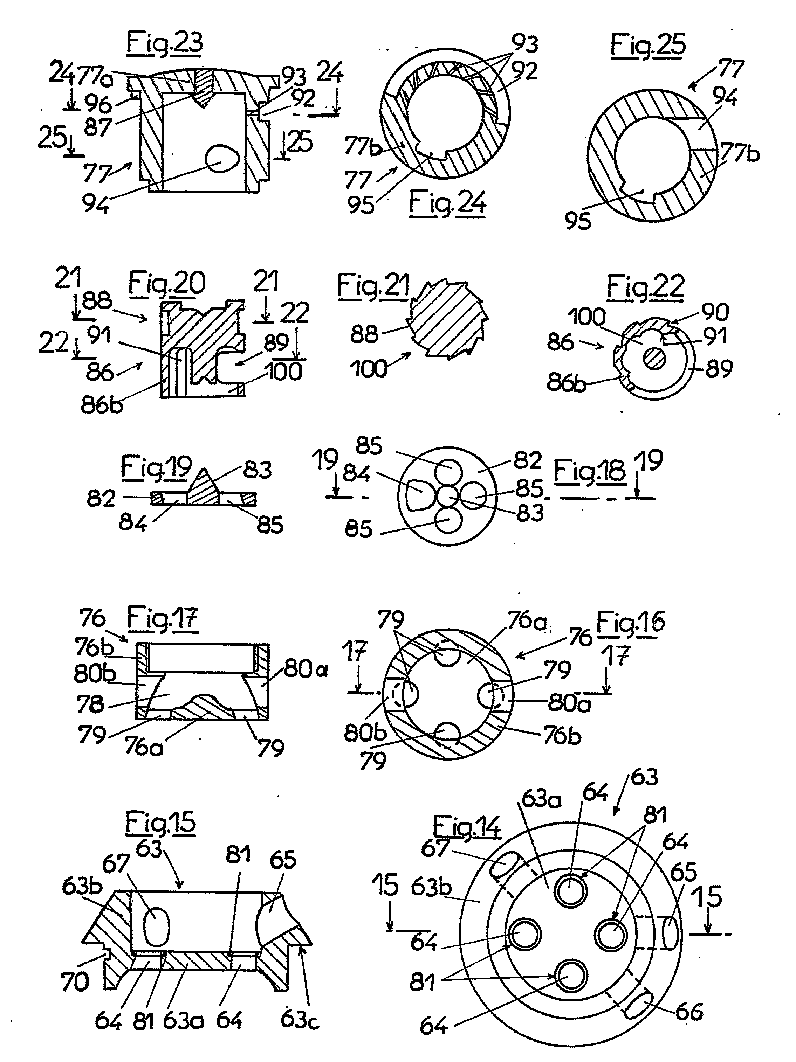

Le sélecteur 63 (figures 13 et 14) est installé dans la partie inférieure de la cavité 62 avec une aptitude de rotation. Il présente une forme tronconique et comporte un fond 63a pourvu de trous 64 espacés de 90 degrés et à partir duquel s'élève une paroi latérale circulaire 63b. Dans cette paroi, sont ménagés deux orifices cylindriques d'entrée 65 et 66 et un orifice de sortie 67. Les orifices 66 et 67 sont diamétralement opposés, tandis que l'orifice 65 disposé entre les deux précédents, est espacé de 45 degrés par rapport à l'orifice 66.

L'un ou l'autre des orifices 65 et 66 se trouve placé en communication avec le canal 61, dans les deux positions du sélecteur 63, tandis que l'orifice 67 peut être placé ou non, suivant la position dudit sélecteur, avec un canal 74 ménagé dans la tête 1b et communiquant avec l'embouchure de raccordement 12, de préférence par l'intermédiaire de la cavité 13.

Le sélecteur 63 est assujetti au corps 1, avec une aptitude de rotation, au moyen d'une bague 68 fixée sur ledit corps, par exemple au moyen de vis 101, et placée en appui contre un épaulement périphérique 63c que présente ledit sélecteur. Un joint annulaire d'étanchéité 69 est placé au point de rencontre du corps 1, du sélecteur rotatif 63 et de la bague fixe 68.

Latéralement et au-dessous de l'épaulement 63c, le sélecteur comporte une gorge circulaire 70 d'une amplitude de 45 degrés, dans laquelle est logé un ergot 71 solidaire de la bague fixe 68, les extrémités opposées de ladite gorge déterminant les deux positions fonctionnelles dudit sélecteur.

Une pomme de douche 72 pourvue de perforations 73 est fixée à la partie inférieure du sélecteur 63, par exemple par vissage et goupillage. De la sorte, la pomme de douche 72 est solidaire en rotation du sélecteur 63 dont elle constitue l'organe de manoeuvre.

Le pulsateur désigné dans son ensemble par la référence 75 à la figure 13, comporte un carter fixe comprenant une partie inférieure 76 et une partie supérieure 77, par exemple assemblées par vissage.

La partie inférieure 76 (figures 16 et 17) est constituée par une cuvette de dérivation cylindrique comportant un fond 76a et une paroi latérale 76b s'élevant à partir de ce fond et délimitant, avec ce dernier, une chambre 78. Dans le fond 76a, sont ménagés quatre trous 79 espacés de 90 degrés, pour le passage de l'eau en direction de la pomme de douche 72, à travers les trous 64 du sélecteur 63, lorsque la position de ce dernier autorise ce passage. La paroi 76b est pourvue d'un orifice d'entrée 80a et d'un orifice de sortie 80b, diamétralement opposés et susceptibles d'être placés ou non en communication avec le canal 61 et avec le canal 74, à travers les orifices cylindriques 65 ou 66 et 67, respectivement, du sélecteur 63, suivant la position de ce dernier.

La cuvette de dérivation 76 est logée à l'intérieur du sélecteur 63 sur le fond 63a duquel elle repose et ses trous 79 communiquent ou non avec les trous 64 que présente ledit fond, suivant la position dudit sélecteur. Des joints annulaires 81 sont disposés autour de l'entrée des trous 64, afin d'assurer l'étanchéité entre le fond 76a de la cuvette de dérivation 76 et le fond 63a du sélecteur 63, lorsque ce dernier est placé dans la position interdisant le passage de l'eau en direction de la pomme de douche.

Dans la partie supérieure de la cuvette de dérivation 76, est installé fixement, par exemple par vissage, un disque 82 rigidement solidaire d'un pivot central 83 orienté vers le haut (figures 18 et 19).

Quatre trous 84, 85 sont ménagés dans le disque 82, avec un espacement de 90 degrés pour le passage de l'eau pulsée. L'un de ces trous (trou 84) présente un évidement supplémentaire pour le passage de l'eau motrice.

Une turbine 86 (figures 20 à 22) est logée dans l'élément supérieur 77 du carter du pulsateur. Cette turbine est supportée par le pivot 83 et elle est également guidée en rotation par un pivot supérieur 87 dont est muni, axialement, la paroi supérieure 77a de l'élément supérieur 77 du carter.

A sa partie supérieure, la turbine 86 est pourvue d'aubes 88 régulièrement réparties sur toute sa périphérie. La partie inférieure de cette turbine est évidée et la paroi latérale 86b de cette partie évidée 100 comporte une ouverture 89 d'une amplitude de 180 degrés. La paroi latérale 86b est en outre pourvue de stries verticales externes 90 et internes 91.

L'élément supérieur 77 du carter du pulsateur comporte une paroi supérieure 77a et une paroi latérale cylindrique 77b s'étendant vers le bas à partir de cette paroi supérieure. Il est pourvu, à sa partie supérieure, d'une gorge latérale demi-circulaire 92. Cette gorge communique avec l'évidement intérieur de l'élément 77, par l'intermédiaire d'une pluralité de perçages 93 constituant autant d'éjecteurs permettant d'engendrer de fins jets d'eau assurant la rotation de la turbine 86 logée dans ledit élément. La gorge 92 est placée en communication permanente avec le canal 59.

Dans sa partie basse, l'élément 77 est doté d'un orifice 94 établissant une communication permanente entre le canal 60 et l'intérieur dudit élément.

Un évidement longitudinal 95 est ménagé dans la surface interne de la paroi latérale 77b, pour l'évacuation de l'eau assurant la rotation de la turbine 86, en direction de la cuvette de dérivation 76.

A sa partie supérieure, l'élément 77 est muni d'un ergot 96 coopérant avec un creux 97 ménagé dans la cavité 62 de la tête 1b, pour assurer le positionnement et l'immobilisation en rotation du carter du pulsateur, afin que les trous et orifices dudit carter soient parfaitement positionnés par rapport aux divers canaux, orifices et trous avec lesquels ils sont ou peuvent être placés en communication.

Un bouchon 98 se vissant dans un taraudage que présente l'entrée supérieure de la cavité 62, permet l'immobilisation en translation du carter 76-77 du pulsateur. Un joint d'étanchéité 99 est disposé entre les surfaces en contact du bouchon 98 et de la cavité 62.

L'appareil ainsi réalisé comprend :
- un conduit d'arrivée 7 ;
- un premier conduit de distribution aboutissant à la pomme de douche 72 et constitué par les passages 61-65-80a-79-64-10 (douche à débit continu), ou par les passages 60-94-89-100-84 et 85-78-79-64-10 (douche à débit pulsé) ;
- un deuxième conduit de distribution aboutissant à l'embouchure de raccordement 12 et constitué par les passages 61-66-80a-78-80b-67-74-13 (alimentation des ajutages en débit continu), ou par les passages 60-94-89-100-84 et 85-78-80b-67-74-13 (alimentation des ajutages en débit pulsé).

On comprend que l'obtention de jets d'eau continus s'obtient, en plaçant le conduit d'arrivée 7 en communication avec le canal 61, au moyen du premier sélecteur constitué par l'accouplement rotatif de la tête 1b par rapport à la poignée 1a et par l'agencement de ces deux organes.

L'eau provenant du canal 61 peut être dirigée, au moyen du deuxième sélecteur rotatif 63, soit vers la pomme de douche 72, soit en direction de l'ajutage amovible engagé dans l'embouchure de raccordement 12.

Dans le premier cas, le sélecteur 63 est placé dans la position suivant laquelle :
- son orifice d'entrée 65 communique avec le canal 61 et avec le trou d'entrée 80a de la cuvette de dérivation 76 ;
- ses trous 64 communiquent avec les trous 79 de ladite cuvette de dérivation ;
- il n'y a pas de communication entre l'orifice de sortie 80b de cette dernière et le canal 74 aboutissant à l'embouchure de raccordement 12.

Dans le second cas, le sélecteur est placé dans la position selon laquelle :
- son orifice d'entrée 66 communique avec le canal 61 et avec l'orifice d'entrée 80a de la cuvette de dérivation 76 ;
- son orifice de sortie 67 communique avec l'orifice de sortie 80b de ladite cuvette de dérivation et avec le canal 74 ;
- il n'y a pas de communication entre ses trous 64 et les trous 79 de la cuvette de dérivation.

Pour obtenir des jets d'eau pulsés, on met en communication le conduit 7 avec les canaux 59 et 60 aboutissant au pulsateur 75 (figure 11).

L'eau motrice provenant du canal 59 est distribuée, par la gorge 92, aux éjecteurs 93 qui engendrent des jets provoquant la rotation de la turbine 86 ; cette eau étant évacuée, par l'intermédiaire de l'évidement 95 et du trou 84, jusqu'à la chambre 78 de la cuvette de dérivation 76.

L'eau provenant du canal 60 pénètre dans le carter du pulsateur, par l'orifice 94 qui se trouve alternativement fermé et ouvert, lors de la rotation de la turbine, suivant qu'il se trouve placé en regard de la paroi latérale 86b de ladite turbine ou de l'ouverture 89 de cette dernière.

On obtient de la sorte un débit pulsé de l'eau qui arrive dans la chambre 78 de la cuvette de dérivation 76, après avoir traversé l'évidement inférieur 100 de la turbine 86 et les trous 84 et 85 du disque 82.

A partir de la chambre 78, l'eau pulsée peut être dirigée, au moyen du sélecteur rotatif 63, soit vers la pomme de douche 72, soit vers l'ajutage amovible installé dans l'embouchure de raccordement 12, de la manière indiquée précédemment.

La fréquence des pulsations peut être abaissée en diminuant le débit d'eau dans le conduit 59 par occultation partielle de ce conduit à sa jonction avec le conduit 7 du corps 1a ; des positions repérées de la bille 57 dans sa gorge circulaire, permettent des coïncidences plus ou moins parfaites entre les conduits 7 ou 59.

Dans un autre mode de réalisation de l'appareil hydrique d'hygiène corporelle selon l'invention, le dispositif pulsateur est disposé entre le robinet mélangeur et le flexible de douche.

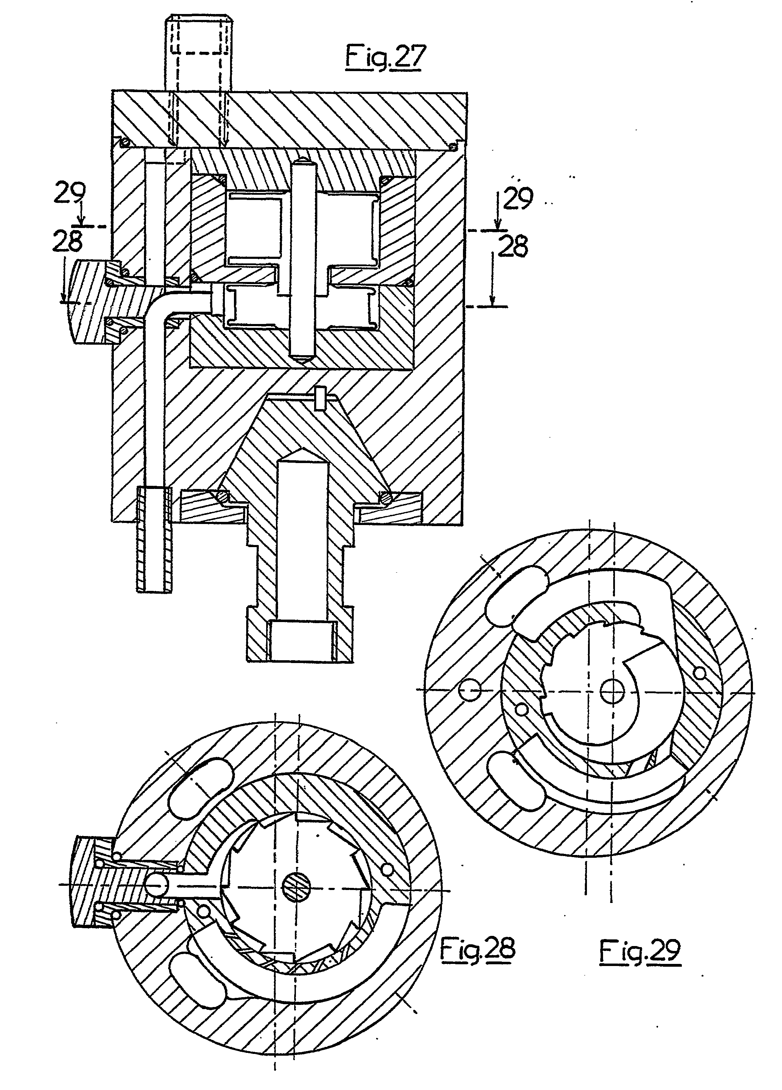

La figure 27 montre une coupe axiale de ce dispositif, et deux sections aux niveaux de la turbine, respectivement, dans ses parties motrice et pulsatrice.

Dans ce mode de réalisation, l'eau ayant servi à la motricité de la turbine peut, par l'intermédiaire d'un bouton rotatif, être rejetée à l'extérieur de l'appareil (augmentation de l'intensité des pulsations) ou mélangée au débit d'eau pulsé (diminution des intensités des pulsations).

## Revendications

1. - Appareil hydrique d'hygiène corporelle comprenant un corps (1) dont une portion est agencée pour constituer une poignée (1a) munie d'un filetage (6) permettant son raccordement à un tuyau flexible, ce corps étant pourvu, intérieurement, d'au moins deux conduits de distribution (8, 9) et d'un conduit d'entrée (7) susceptible d'être mis en communication avec l'un ou l'autre desdits conduits de distribution, suivant la position d'un sélecteur à deux positions (1a-1b-2), caractérisé en ce que l'un desdits conduits de distribution (8) débouche dans une large cavité (10) ménagée dans la partie (1b) constituant la tête de l'appareil et délimitée par une pomme de douche (11), tandis que le second desdits conduits de distribution (9) communique avec une embouchure de raccordement (12) également ménagée dans ladite tête (1b), et en ce que ledit appareil comporte encore un ajutage amovible (20, 23, 25, 35, 41) doté d'un embout de fixation (17) destiné à être relié à ladite embouchure, par exemple par insertion dans cette dernière.

2.- Appareil selon la revendication 1, caractérisé en ce qu'une cavité (13) munie d'un moyen de fermeture étanche (15-16) est ménagée dans le corps (1) de l'appareil, cette cavité étant disposée en amont de l'embouchure de raccordement (12) et communiquant, à la fois, avec ladite embouchure et avec le conduit de distribution (9) placé en relation avec cette dernière; une crépine (14) étant, de préférence, installée dans ladite cavité.

3. - Appareil suivant la revendication 1, caractérisé en ce qu'un dispositif pulsateur (75) est disposé sur le conduit (60-78-74) de distribution aboutissant à l'embouchure de raccordement (12) et/ou sur le conduit de distribution (60-78-79-64-10) aboutissant à la pomme de douche (72), et/ou à l'extérieur de l'appareil, sur le circuit d'arrivée d'eau à cet appareil.

4. - Appareil selon la revendication 1, caractérisé en ce que la poignée (1a) et la tête (1b) sont accolées dans le prolongement l'une de l'autre par l'intermédiaire de l'une de leurs extrémités comportant une surface plane, lesdites extrémités étant assemblées, de manière étanche, au moyen d'un dispositif d'accouplement (1a-1b-2-3-4-5) permettant une rotation de ladite tête, cet agencement constituant un sélecteur à deux positions.

5. - Appareil suivant l'une des revendications 1 ou 4, caractérisé en ce qu'il comporte un sélecteur rotatif (63) à deux positions, solidaire en rotation de la pomme de douche (72) constituant l'organe de manoeuvre dudit sélecteur, et permettant de diriger l'eau provenant du conduit d'arrivée (7-61 ; 7-60-94-89-100-84-85-78-79), soit en direction de ladite pomme de douche, soit vers l'embouchure de raccordement (12).

6. - Appareil selon la revendication 1, caractérisé en ce qu'un limiteur de débit (28) est monté à l'intérieur de l'embout de fixation (17) des ajutages amovibles (20, 23, 25, 35, 41).

7. - Appareil suivant la revendication 1, caractérisé en ce que l'embouchure de raccordement (12) et l'embout de fixation (17) des ajutages amovibles (20, 23, 25, 35, 41) sont pourvus de moyens complémentaires d'assemblage (19, 19a, 18) permettant une fixation desdits ajutages avec une liberté de rotation. .

8. - Appareil suivant la revendication 1 comprenant des ajutages amovibles constitués par des douchettes buccales (20, 23), caractérisé en ce que ces douchettes buccales comportent une portion antérieure aplanie formant une surface rectangulaire (21) pourvue de rangées transversales espacées de perforations (22), ou de fentes transversales espacées (24), ces perforations s'inscrivant, avec ou sans interruption, aux croisements de lignes orthogonales.

9. - Appareil selon la revendication 1 comprenant un ajutage amovible (25) destiné à l'hygiène corporele interne, caractérisé en ce que cet ajutage est muni d'un détendeur secondaire variateur de débit (30) installé dans la partie avant du corps (26) dudit ajutage ; des canaux d'évacuation longitudinaux (33) étant, de préférence, ménagés dans ledit corps dont la surface latérale est pourvue des orifices (33a, 33b) desdits canaux.

10. - Appareil suivant la revendication 1 comprenant un ajutage amovible constitué par une douchette de massage (35) comportant un corps de forme allongée (36) à l'une des extrémités duquel est montée une pomme de douche perforée (37), caractérisé en ce que l'autre extrémité dudit corps est agencée pour former un embout de fixation, et en ce qu'un manchon souple en forme de cloche, (39) est monté à l'avant de ladite pomme de douche, ce manchon étant pourvu de perforations latérales (40).

11. - Appareil selon la revendication 1 comprenant un ajutage amovible constitué par un irrigateur (41) comprenant un corps creux (41a) de forme allongée et pourvu d'un conduit longitudinal (49), caractérisé en ce qu'un premier dispositif limiteur de débit (28) est monté dans l'embout de fixation (17-18) constituant la partie postérieure de ce corps à l'avant duquel est installé, avec une aptitude de rotation, un deuxième limiteur de débit (43) également doté d'un conduit longitudinal (50) et dont l'extrémité avant est munie d'un embout d'éjection (46) avec pointe mousse (47), les orifices contigus (49a, 50a) de ces orifices étant excentrés de manière à pouvoir être placés dans une position de correspondance plus ou moins complète.

12. - Appareil selon la revendication 3, caractérisé en ce que le pulsateur (75) comprend une turbine (86) pourvue, à sa partie supérieure, d'aubes périphériques (88) et logée dans un carter (77) comportant des perçages (93) s'ouvrant dans le fond d'une gorge latérale (92) et disposés en regard desdites aubes pour le passage de l'eau motrice commandé par un premier sélecteur d'entrée (1a, 1b, 2), un évidement longitudinal (95) étant ménagé dans la surface interne de la paroi latérale dudit carter pour l'évacuation de l'eau motrice en direction d'un deuxième sélecteur (63), ladite turbine comportant encore, dans sa partie basse, une paroi latérale (86b) dans laquelle est ménagée une ouverture (89) et délimitant un évidement (100), le carter (77) étant en outre pourvu d'un orifice (94) placé en regard de la portion de la paroi latérale (86b) munie de l'ouverture (89) et susceptible d'être mis en communication avec le conduit d'entrée (7) au moyen du premier sélecteur d'entrée, l'eau motrice et l'eau pulsée produite par la rotation de la turbine (86) étant dirigées, par l'intermédiaire du deuxième sélecteur (63), soit vers la pomme de douche (72), soit en direction de l'embouchure de raccordement (12), soit à l'extérieur, en eau perdue.

**Claims**

1. Hydraulic apparatus for bodily hygiene comprising a body (1) of which a portion is arranged to constitute a handle (1a) provided with a threading (6) permitting its coupling to a flexible pipe, this body being provided internally with at least two distribution conduits (8, 9) and an inlet conduit (7) capable of being placed in communication with one or the other of the said distribution conduits according to the position of a two-position selector (1a-1b-2), characterised in that one of the said distribution conduits opens into a wide cavity (10) arranged in the part (1b) constituting the head of the apparatus and bounded by a spray head (11), whilst the second of the said distribution conduits (9) communicates with a coupling mouthpiece (12) likewise arranged in the said head (1b), and in that the said apparatus comprises also a removable attachement (20, 23, 25, 35, 41) provided with a fixing ferrule (17) serving to be coupled to the said mouth piece, for example by insertion in the same.

2. Apparatus, according to claim 1, characterised in that a cavity (13) provided with a fluid tight closing means (15–16) is arranged in the body (1) of the apparatus, this cavity being disposed upstream of the coupling mouth piece (12) and communicating both with the said mouth piece and with the distribution conduit (9) placed in relation with this latter, a strainer (14) being preferably installed in said cavity.

3. Apparatus, according to claim 1, characterised in that a pulsator device (75) is disposed on the distribution conduit (60–78–74) terminating at the coupling mouth piece (12), and/or on the distribution conduit (60–78–79–64–10) terminating at the spray head (72), and/or at the exterior of the apparatus, on the water inlet circuit of the apparatus.

4. Apparatus, according to claim 1, characterised in that the handle (1a) and the head (1b) are joined one as an extension of the other by means of one of their ends comprising a plane surface, the said ends being assembled, in fluid tight manner, by means of a coupling device (1a–1b–2–3–4–5) permitting a rotation of the said head, this arrangement consituting a two-position selector.

5. Apparatus, according to eighter of claims 1 and 4, characterised in that it comprises a rotary two-position selector (63) fast in rotation with the spray head (72) consituting the manipulating member of said selector and permitting to direct the water coming from the inlet conduit (7–61); (7–60–94–89–100–84–85–78–79), either in the direction of the said spray head, or towards the coupling mouth piece (12).

6. Apparatus, according to claim 1, characterised in that an output limiter (28) is mounted at the interior of the fixing ferrule (17) of the removable attachments (20,23,25,35,41).

7. Apparatus, according to claim 1, characterised in that the coupling mouth piece (12) and the fixing ferrule (17) of the removable attachments (20,23,25,35,41) are provided with complementary assembling means (19,19a,18) permitting fixing of the said attachments with freedom of rotation.

8. Apparatus, according to claim 1, comprising removable attachments constituted by buccal sprays (20,23), characterised in that these buccal sprays comprise a flattened forward portion forming a rectangular surface (21) provided with rows transversely spaced of perforations (22), or of spaced transversal openings (24), these perforations being formed, with or without interruption, at the crossing points of straight lines.

9. Apparatus, according to claim1, comprising a removable attachment (25) intended for internal bodily hygiene, characterised in that this attachment is provided with a secondary expander and output variator (30) installed in the forward part of the body (26) of the said attachment; longitudinal evacuation channels (33) being preferably formed in the said body the surface laterally of which is provided with the orifices (33a, 33b) of the said channels.

10. Apparatus, according to claim 1, comprising a removable attachment constituted by a massage spray (35) comprising a body (36) of elongated form at one of the ends of which is mounted a perforated spray head (37), characterised in that the other end of the said body is arranged to form a fixing ferrule, and in that a flexible sleeve in the form of a cup (39) is mounted in front of the said spray head, this sleeve being provided with lateral perforations (40).

11. Apparatus, according to claim 1, comprising a removable attachment constituted by an irrigator (41) comprising a hollow body (41a) of elongated form and provided with a longitudinal conduit (49), characterised in that a first output limiter device (28) is mounted in the fixing ferrule (17–18) constituting the rear part of the body at the front of which there is installed, with a capability of rotation, a second output limiter (43) likewise provided with a longitudinal conduit (50) and the forward end of which is provided with an ejection ferrule (46) with soft tip (47), the contiguous orifices (49a, 50a) of these orifices being eccentric in such a manner as to able to placed in a more or less complete condition of correspondence.

12. Apparatus, according to claim 3, characterised in that the pulsator (75) comprises a turbine (86) provided, at its upper part, with peripheral vanes (88) and positioned in a housing (77) comprising openings (93) opening in the base of a lateral recess (92) and disposed opposite to the said vanes for the passage of driving water controlled by a first input selector (1a,1b,2), a longitudinal trough (95) being arranged in the internal surface of the lateral wall of the said housing for the evacuation of the driving water in the direction of a second selector (63), the said turbine also comprising, in its lower part, a lateral wall (86b) in which is formed an opening (89) and bounding a recess (100), the housing (77) being furthermore provided with an orifice (94) placed opposite to the portion of the lateral wall (86b) provided with the opening (89) and capable of being placed in communication with the inlet conduit (7) by means of the first inlet selector, the driving water and the pulsated water produced by the rotation of the turbine (86) being directed, by means of the second selector (63), either towards the spray head (72), or in the direction of the coupling mouth piece (12), or to the exterior, as waste water.

**Patentansprüche**

1. Mit Wasser betriebener Hygieneapparat für den menschlichen Körper, mit einem Körper (1), von dem ein Abschnitt zu einem Handgriff (1a) mit einem daran angebrachten Gewinde (6) ausgebildet ist, welches den Anschluß an einen biegsamen Schlauch gestattet, wobei der Körper im Inneren zumindest zwei Verteilerleitungen (8, 9) und eine Eintrittsleitung (7) aufweist, die mit der einen oder der anderen der Verteilerleitungen gemäß der Stellung einer Wähleinrichtung mit zwei Positionen (1a–1b–2) in Strömungsverbindung bringbar ist, dadurch gekennzeichnet, daß die eine der Verteilerleitungen (8) in einen großen Hohlraum (10) einmündet, der in dem Abschnitt (1b) ausgeformt ist, der den Kopf des Apparats bildet und von einer perforierten Duschwand (11) begrenzt ist, während die zweite der Verteilerleitungen (9) mit einer Verbindungsöffnung (12) in Strömungsverbindung steht, die ebenfalls in dem genannten Kopf (1b) ausgebildet ist, und daß der Apparat mit einer entfernbaren Zusatzeinrichtung (20, 23, 25, 35, 41) ausgestattet ist, die einen Befestigungsansatz (17) aufweist, der mit der genannten Öffnung, beispielsweise durch Einstecken, verbindbar ist.

2. Apparat nach Anspruch 1, dadurch gekennzeichnet, daß ein Hohlraum (13), der mit einem abdichtenden Verschluß (15, 16) versehen ist, in dem Körper (1) des Apparats ausgebildet ist, wobei dieser Hohlraum bezüglich der Verbindungsöffnung (12) stromaufwärts gelegen ist und zugleich mit der Öffnung und der Verteilerleitung (9) in Strömungsverbindung steht, welche mit der letzteren Öffnung in Wirkverbindung steht, wobei vorzugsweise in dem Hohlraum ein Korb (14) installiert ist.

3. Apparat nach Anspruch 1, dadurch gekennzeichnet, daß eine Pulsatoreinrichtung (75) auf der Verteilerleitung (60–78–74) aufgesetzt ist, welche zur Verbindungsöffnung (12) führt und/oder auf die Verteilerleitung (60–78–79–64–10), welche zur Duschwandung (72) führt, und/oder am äußeren des Apparats auf der Leitung, die Wasser dem Apparat zuführt.

4. Apparat nach Anspruch 1, dadurch gekennzeichnet, daß der Handgriff (1a) und der Kopf (1b) an der Verlängerung ihrer jeweils einander zugewandten Enden, die eine ebene Oberfläche aufweisen, miteinander verbunden sind, wobei die Enden abdichtend mittels einer Kupplungsvorrichtung (1a–1b–2–3–4–5) miteinander verbunden sind, die eine Drehung des Kopfes gestattet, wobei diese Anordnung eine Wähleinrichtung in zwei Stellungen bildet.

5. Apparat nach einem der Ansprüche 1 oder 4, dadurch gekennzeichnet, daß er eine in zwei Positionen drehbare Wähleinrichtung (63) aufweist, die mit der Duscheinrichtung (72) verbunden ist, welche das Betätigungsorgan der Whleinrichtunb bildet und die es gestattet, Wasser aus der Eingangsleitung (7–61; 7–60–94–89–100–84–85–78–79) entweder in Richtung der Duscheinrichtung oder in Richtung der Verbindungsöffnung (12) zu dirigieren.

6. Apparat nach Anspruch 1, dadurch gekennzeichnet, daß im Inneren des Befestigungsansatzes (17) der entfernbaren Zusatzeinrichtung (20, 23, 25, 35, 41) ein Abgabebegrenzer (28) eingebaut ist.

7. Apparat nach Anspruch 1, dadurch gekennzeichnet, daß die Verbindungsöffnung (12) und der Befestigungsansatz (17) der entfernbaren Zusatzeinrichtung (20; 23, 25, 35, 41) mit zusätzlichen Zusammenbaumitteln (19, 19a, 18) ausgestattet sind, die eine Befestigung der Zusatzeinrichtung bei freier Drehbarkeit gestatten.

8. Apparat nach Anspruch 1, mit entfernbaren Zusatzeinrichtungen, die von Mundduschen (20, 23) gebildet werden, dadurch gekennzeichnet, daß diese Mundduschen einen vorderen abgeflachten Abschnitt aufweisen, der eine rechteckige Oberfläche (21) bildet, welche in Querrichtung im Abstand verteilt mit Perforationen (22) versehen ist oder mit einen Abstand voneinander aufweisenden, in Querrichtung verlaufenden Schlitzen (24), wobei diese Perforationen mit oder ohne Unterbrechung über Kreuz mit orthogonalen Linien erfolgen.

9. Apparat nach Anspruch 1, mit entfernbaren Zusatzeinrichtungen (25), bestimmt für die innere Hygiene-Körperpflege, dadurch gekennzeichnet, daß diese Zusatzeinrichtung mit einem zweiten Druckminderer-Ausgabevariator (30) ausgestattet ist, der zum Teil in dem Körper (26) der Zusatzeinrichtung installiert ist; und daß vorzugsweise in dem Körper in Längsrichtung verlaufende Evakuierungskanäle (33) ausgebildet sind, wobei die Seitenfläche des Körpers mit Öffnungen (33a, 33b) für die Kanäle (33) ausgestattet sind.

10. Apparat nach Anspruch 1, mit einer entfernbaren Zusatzeinrichtung, die als Massagedusche (35) ausgebildet ist, die einen verlängerten Körper (36) aufweist, an dessen einem Ende eine perforierte Duscheinrichtung (37) vorgesehen ist, dadurch gekennzeichnet, daß das andere Ende des Körpers mit einem Befestigungsansatz ausgestattet ist und daß eine weiche Muffe in Form einer Glocke (39) vor der Duscheinrichtung angeordnet und mit seitlichen Perforationen (40) ausgestattet ist.

11. Apparat nach Anspruch 1, mit einer entfernbaren Zusatzeinrichtung, die von einem Spülapparat (41) gebildet wird, der aus einem hohlen Körper (41a) länglicher Form besteht und mit einem länglichen Kanal (49) ausgestattet ist, dadurch gekennzeichnet, daß eine erste Ausgabebegrenzervorrichtung (28) in dem Befestigungsansatz (17–18) angeordnet ist, der den rückwärtigen Teil des Körpers bildet, an dem im vorderen Bereich drehbar ein zweiter Abgabebegrenzer (43) vorgesehen ist, der ebenfalls mit einer in Längsrichtung verlaufenden Leitung (43) ausgestattet ist und dessen vorderes Ende mit einem Einspritzansatz (46) mit stumpfer Spitze (47) versehen ist, wobei die einander anschließenden Öffnungen (49a, 50a) der Leitung derart exzentrisch zueinander sind, daß sie in eine mehr oder weniger übereinstimmende Position gebracht werden können.

12. Apparat nach Anspruch 3, gekennzeichnet, dadurch, daß der Pulsator (75) eine Turbine (86) aufweist, die an ihrem oberen Bereich mit Umfangsschaufeln (88) versehen und in einem Gehäuse (77) eingesetzt ist, das Öffnungen (93) besitzt, die sich im Boden einer seitlichen Nut (92) öffnen und in Bezug auf die genannten Schaufeln für den Durchgang von Antriebswasser ausgebildet sind, das von einer ersten Eintrittssteuereinrichtung (1a, 1b, 2) gesteuert wird, und mit einer in Längsrichtung verlaufenden Ausnehmung, die in der Innenoberfläche der Seitenwand des Gehäuses zur Ableitung des Antriebswassers in Richtung einer zweiten Wähleinrichtung (63) ausgebildet ist, wobei die Turbine in ihrem unteren Bereich eine Seitenwand (86b), besitzt, in der eine Öffnung (89) ausgebildet ist, und die eine Kammer (100) begrenzt und wobei das Gehäuse (77) des weiteren mit einer mit Bezug auf den Abschnitt der Seitenwand (86b), der mit der Öffnung (89) ausgestattet ist, ausgerichteten Öffnung (94) versehen ist, die über eine erste Eintrittswähleinrichtung mit der Eintrittsleitung (7) in Strömungsverbindung setzbar ist, wobei das Antriebswasser und das pulsierende Wasser, das durch die Rotation der Turbine (86) erzeugt wurde, über Zwischenschaltung einer zweiten Wähleinrichtung (63) entweder zur Duscheinrichtung (72) in Richtung der Verbindungsöffnung (12) oder als verbrauchtes Wasser nach außen dirigiert werden kann.

Fig.1

Fig.2

Fig.3

Fig.5

Fig.4

Fig.10

Fig.6

Fig.8

Fig.7

Fig.9

Fig.11

Fig.12

Fig.23

Fig.24

Fig.25

Fig.20

Fig.21

Fig.22

Fig.19

Fig.18

Fig.17

Fig.16

Fig.15

Fig.14

EP 0 235 487 B1

Fig. 26

Fig. 13

Fig.27

Fig.28

Fig.29